# EUROPEAN PATENT SPECIFICATION

(11) **EP 1 188 132 B1**
(45) Date of publication and mention of the grant of the patent: **21.04.2004**
(21) Application number: 00911797.9
(22) Date of filing: 11.02.2000
(51) Int. Cl.: G06F 17/27, G06F 17/60

(54) **DATA PARSING SYSTEM FOR USE IN ELECTRONIC COMMERCE**
SYSTEM ZUR ANALYSE VON DATEN FÜR DEN ELEKTRONISCHEN HANDEL
SYSTEME D'ANALYSE DE DONNEES DESTINE AU COMMERCE ELECTRONIQUE

(30) Priority: 11.02.1999 US 119777 P
(43) Date of publication of application: 20.03.2002
(73) Proprietor: Pitney Bowes Docsense, Inc., Stamford, CT 06926 (US)
(72) Inventor: CLARKE, William, D., Northampton, MA 01060 (US); FLYNN, James, P., Tappan, NY 10983 (US)
(74) Representative: HOFFMANN - EITLE
(86) International application number: PCT/US2000/003734
(87) International publication number: WO 2000/048088

(56) References cited:
- EP-A- 0 631 244
- US-A- 5 675 801
- KLEIN E ET AL: "THE PARSER GENERATING SYSTEM PGS" SOFTWARE PRACTICE & EXPERIENCE,GB,JOHN WILEY & SONS LTD. CHICHESTER, vol. 19, no. 11, 1 November 1989 (1989-11-01), pages 1015-1028, XP000095040 ISSN: 0038-0644
- KLEIN, B. ET AL.: "Error Tolerant Document Structure Analysis" PROC. IEEE INT. FORUM ON RESEARCH AND TECHNOLOGY ADVANCES IN DIGITAL LIBRARIES ADL '97, 7 - 9 May 1997, pages 116-127, XP002163487

## Description

The present invention rolates to methods of parsing electronic documents and to a parsing engine for parsing such documents. The invention is applicable to data parsing from various electronic data formats such as legacy print stream files, electronic data interchange (EDI) files, Extensible Markup Language (XML) files, and structured text formats for use in electronic commerce such as electronic bill presentment and electronic statements, as well as for assisting in integration of legacy systems.

More and more organizations are finding themselves pressed to conduct business electronically (so-called e-business) over the internet or other computer networks. E-business calls for specialized applications software such as Electronic Bill Presentment and Payment (EBPP) applications and Electronic Statement Presentment (ESP) applications. To implement such applications, traditional paper documents have to be converted to electronic form which may be processed electronically and exchanged over the internet or otherwise with customers, suppliers or others. The paper documents will typically be formatted as Hypertext Markup Language (HTML) Web pages, e-mail messages, XML messages, or other electronic formats suitable for electronic exchange, processing, display and/or printing.

Consider, for example, a telephone company that is in the process of implementing an EBPP service. Any EBPP implementation must be integrated with the organization's existing billing systems. The straightforward approach to integrating the billing systems would be simply to get the data from the existing billing system's database and use that data in the new e-business system. This approach, however, is not as simple as it may seem. Many legacy systems do not have a standard interface for data extraction and, moreover, the information required to create an electronic document often does not exist in any one easily accessible database format. The telephone company for example might maintain three different databases feeding into its legacy billing application: (1) A customer information database containing account numbers, calling plans, addresses and other customer profile information-this database would tend to be updated infrequently; (2) a rate and tariff database containing the rate structure used to calculate the cost of calls, which is typically based on geographic zones, time of day and the like-this database would tend to be updated periodically; (3) a transaction database containing the transaction history of the calls made by customers, including number called, duration and the like-this database would be updated very frequently.

These databases may be located on three separate and distinct computer systems (e.g. IBM Mainframe, Tandem fault tolerant system, UNIX minicomputer and so on) and in three different database formats (e.g. Oracle RDBMS, flat files, IMS-database, and so on). Moreover, there is typically a great deal of application logic embedded in the billing system's legacy software code, which could be in the form of a COBOL program written in the 1960s, for calculating taxes, discounts, special calling charges and so on. Because of these complexities, it is generally not possible simply to read a database to get the required billing data. Even though it may be possible to recreate a bill for use in e-business from original data sources, this would generally require a re-creation of all of the functionality that exists in an organization's existing billing system. The cost and timeframe to do this would generally be prohibitive.

For use in legacy system integration and transition to e-commerce, specialized software tools known as parsers have been developed to extract data out of legacy file formats. The known parsers are monolithic in the sense that the parsing is performed by one large program (e.g. parser.exe) for all documents and file formats. The following example points out the inherent problems with this approach.

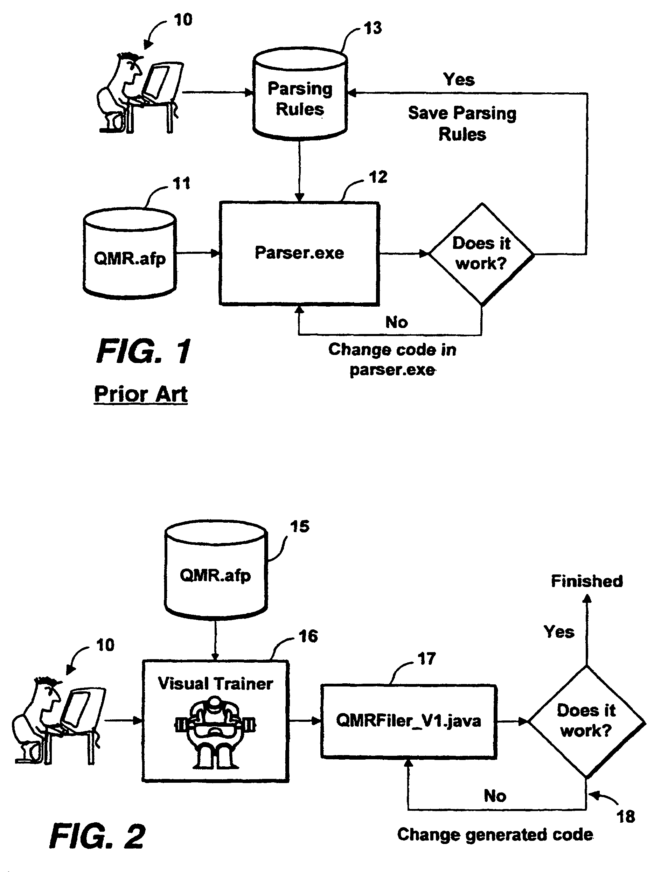

Consider a company, for definiteness referred to as *Acme Credit Card Corp*., that wishes to make its Quarterly Management Report (QMR) available to customers over the Internet. The challenge is to parse the statement data out of the existing print stream created by Acme's legacy system. This print stream is located in a file called *QMR*.*AFP*, which is in an IBM AFP file format. FIG. 1 shows the logical processing flow used by monolithic parsers.

When using a monolithic parser a developer/user 10 typically creates rules for parsing a data stream, which are applied by monolithic parsing engine 12. If these rules enable the parser to parse the input document QMR.afp from data source 11 successfully, the rules are saved in a rule base 13 and subsequently used in a production application to extract data out of the legacy format. The inherent problem with this approach is that, because of the extreme variability in legacy formats, such as print streams, it is virtually impossible to pre-define all possible rules for parsing data. In e-business applications such as EBPP, typically nothing less than 100% accuracy is acceptable. Vendors are compelled to update their parsers frequently to handle new rules. Furthermore, it may even be necessary to put customer-specific code into the monolithic parser. For example, if the Acme QMR document has an Acme-specific idiosyncrasy, which no pre-existing rule could handle, it then becomes necessary to add a new rule and update the parser code, or even worse, add custom Acme-specific code to the parser as shown in the following pseudo code listing.

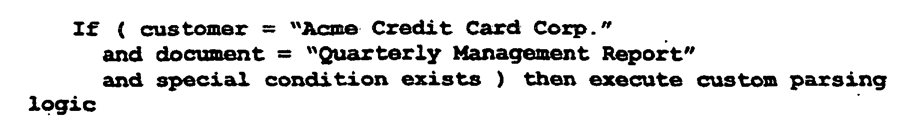

Although the custom code approach of the preceding listing might work, nevertheless putting customer-specific and document-specific code logic in a general-purpose utility is highly problematic from an engineering and quality control point of view. Such production parser code would constantly need to be updated for specific cases, making the parser overcomplicated, which will generally result in a higher number of programming bugs. Furthermore, the extra condition checking would tend to slow the parser operation. Moreover, the inclusion of customer-specific and document-specific code in a monolithic parser makes it unduly burdensome for a software vendor to offer the same parser to many different organizations.

According to a first aspect of the invention, there is provided a method of parsing electronic documents for selected data, each said electronic document being represented by an input data stream of characteristic type, comprising the steps of: displaying a sample document representative of a first said characteristic input data stream type; defining extraction data fields in said sample document; automatically generating filer source code specific to said sample document and said first characteristic input data stream type, said automatically generated filer source code embodying rules for extracting data from said extraction data fields; maintaining an association between said filer source code and said first characteristic input data stream type; and storing said filer source code for subsequent use in parsing further data-bearing documents of said first characteristic input data stream type.

According to a second aspect of the invention, there is provided a parsing engine for parsing electronic documents for selected data, each said electronic document being represented by an input data stream of characteristic type, comprising: means for displaying a sample document representative of a first said characteristic input data stream type; means for defining extraction data fields in said sample document; means for automatically generating filer source code specific to said sample document and said first characteristic input data stream type, said automatically generated filer source code embodying rules for extracting data from said extraction data fields; means for maintaining an association between said filer source code and said first characteristic input data stream type; and means for storing said filer source code for subsequent use in parsing further data-bearing documents of said first characteristic input data stream type.

For a better understanding of the invention, and to show how the same may be carried into effect, reference will now be made, by way of example, to the accompanying drawings in which:
FIG. 1 is a high-level logic flow diagram showing the processing approach of prior art monolithic parsers;
FIG. 2 is a high-level logic flow diagram illustrating the parsing approach according to an embodiment of the invention;
FIG. 3 is the first page of a print data stream output in a simple example;
FIG. 4 shows a filer class hierarchy; and
FIG. 5 is a block diagram showing the conversion of APF documents to XML documents.

The following describes a parsing technique that avoids the disadvantages of known monolithic parsers. Instead of embodying an all-encompassing rule base in parsing code for handling a variety of documents from a variety different types of input data streams, the present invention generates code specific to each input document and data stream type, which may then be updated as needed to handle document-specific idiosyncrasies without requiring modifications to the core parser code.

More specifically, as a user defines parsing rules for extracting data from a representative sample document, the invention automatically generates source code in the background that is specific to that document and that embodies the rules for extracting data from that particular document. The generated code may be modified manually as needed to account for any idiosyncratic conditions associated with the document. The code so produced is generally referred to herein as filer source code, or in executable form as executable filer code, or simply as a filer. Each representative document has associated with it its own filer. A parsing engine hereinafter described comprises a collection of such individual filers appropriate for the types of documents that arise in any given organization. A mapping or other association is maintained between representative document types and their filers. In regular operation, a user selects a data set to be extracted from certain documents. When the parsing engine receives a document in an input data stream, the associated filer is loaded and parses that document for the selected data set. Then another filer is loaded in response to another input document, and so on. The filers may be especially efficiently generated using an object-oriented approach and then dynamically instantiated at run time as is supported, for example, by the Java programming language.

FIG. 2 illustrates the logical process flow for creating a filer for the QMR.afp document file according to one embodiment of the invention. User 10 starts by opening the QMR.afp file from document repository 15 in an application referred to herein as a visual trainer 16. Visual trainer 16 enables user 10 to define the parsing rules for a particular document (an activity sometimes referred to as training a document) and generates the initial filer code for that document. Visual trainer 16 displays the print file to user 10 at a display monitor the same as it would appear in a hard copy printout. The user visually defines the data (e.g. text fields) that should be extracted from the input stream as well as any other aspects concerning the AFP data stream, such as page breaks, images and the like. Once the input AFP data stream has been fully defined in this manner, the visual trainer generates the filer source code that can be used to parse the document. In FIG. 2 the filer code is shown at block 17 as the file QMRFiler_V1.java.

It is an advantage of the method that if the filer code so generated does not extract the desired data from the AFP file with 100% accuracy, the filer can readily be updated by changing the filer code, as indicated at loop 18 in FIG. 2. By expressing the rules for parsing data streams in a high-level programming language, the present approach makes it possible to handle the numerous idiosyncrasies of complex legacy file formats, such as print streams. Even if the visual trainer tool used is not 100% effective, a filer developer can always add custom code to the data-stream-specific filer because the filer developer can always update the document-specific filer code without having to resort to modifying the core code of the general-purpose tool. Another benefit of the method is that the document-specific code will not only be more flexible than the general-purpose code of a monolithic parser, but it will also tend to be faster since it can be tuned for a particular input stream. When the filer code is generated using an object oriented approach and then dynamically instantiated (as is conveniently performed in the Java programming language). filer classes can be automatically and efficiently loaded by a running program without requiring a separate, time-consuming and disruptive compile-link-and-load sequence.

For clarity of exposition, an embodiment of the invention will now be illustrated in the example of a fictitious company called Acme Corp, which produces a generic monthly bill. The Acme Corp legacy system produces a print file in the Acme Presentation Format referred to here as APF. As the name suggests, this legacy print file format is a fictitious format used for the purpose of illustration. The following listing shows the APF bill print file from Acme:
**COM**:Sample Alysis Print Format (APF) file
**PTX**:Acme Bill POS:1,40 FON:TimesRoman
**PTX**:To Jim Flynn POS:3,20 FON:Arial
**PTX**:Amount Due POS:5,20 FON:TimesRoman
**PTX**:$ POS:4,35 FON:Arial
**PTX**:200 POS:4,36 FON:Courier
**PTX**:. POS : 4 , 37 FON:TimesRoman
**PTX**:00 POS:4,38 FON:Courier
**PGB**:
**PTX**:Acme Bill POS:1,40 FON:TimesRoman
**PTX**:To Bill Clarke POS:3,20 FON:Arial
**PTX**:Amount Due POS:5,20 FON:TimesRoman
**PTX**:$ POS:4,35 FON:Arial
**PTX**:300 POS:4,36 FON:Courier
**PTX**:. POS:4,37 FON:TimesRoman
**PTX**:00 POS:4,38 FON:Courier

The preceding APF file is typical of some print stream formats. As may be seen from the listing, control and formatting information is encapsulated in the file along with the text that will be printed on the page. The following table describes the formatting commands for APF format files.

**Table I**

| **Formatting Command** | **Description** | **Parameters** |
|---|---|---|
| COM: | Comment | The comment text that follows the formatting command. This text does not appear on the printed page. |
| PTX: | Presentation text item | The text to be printed immediately follows the formatting command. |
| | | |
| | | A POS: formatting command |
| | | |
| | | A FON: formatting command |
| POS: | Position an the printed page to add the preceding presentation text | The line number, followed by a comma, followed by a column |
| FON: | The font to display the preceding presentation text in | The font name |
| PGB: | Page break | N/A |

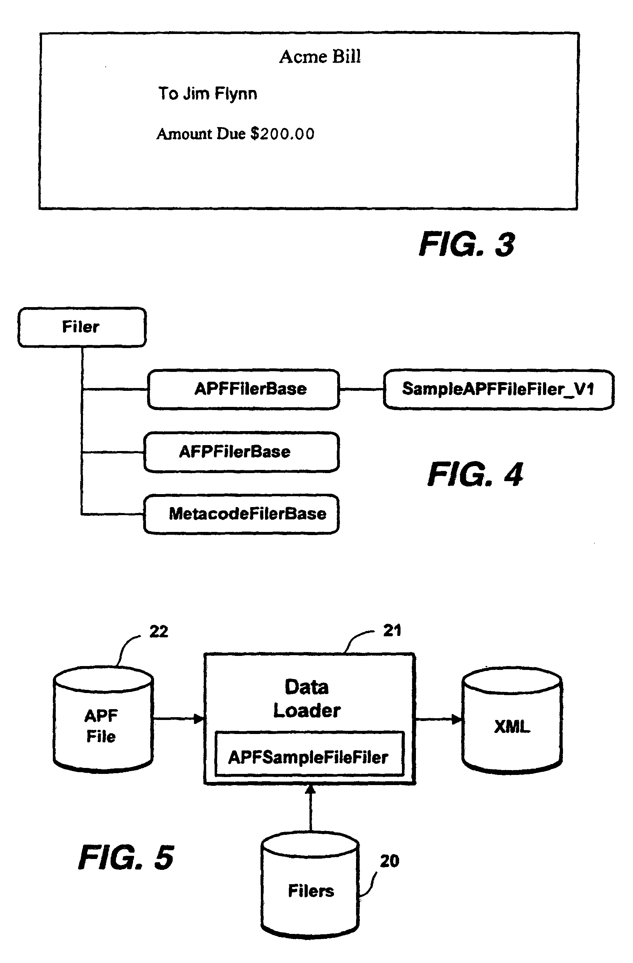

The APF file in this example may be understood from the preceding table. The first page of the output when the file is printed is shown in FIG. 3.

A complicating point illustrated by this example is that the information shown on a printed page is not necessarily located in one part of the physical print file. In this example. the data in the print file is separated by font. In fact, in many real-world instances print file composition engines sort print files by font, which serves to optimize printing speed. The following listing shows the sorted version of the print file in this example, which would produce identical output to the non-sorted version.
COM:Sample Alysis Print Format (APF) file sorted for optimization
PTX:Acme Bill POS:1,40 FON:TimesRoman
PTX:Amount Due POS:5,20 FON:TimesRoman
PTX:. POS:4,37 FON:TimesRoman
PTX:To Jim Flynn POS:3,20 FON:Arial
PTX:$ POS:4,35 FON:Arial
PTX:200 POS:4,36 FON:Courier
PTX:00 POS:4,38 FON:Courier
PGB:
PTX:Acme Bill POS:1,40 FON:TimesRoman
PTX:Amount Due POS:5,20 FON:TimesRoman
PTX:. POS:4,37 FON:TimesRoman
PTX:To Bill Clarke POS:3,20 FON:Arial
PTX:$ POS:4,35 FON:Arial
PTX:300 POS:4,36 FON:Courier
PTX:00 POS:4,38 FON:Courier

As illustrated by the preceding print file, the text for a dollar amount might utilize three different fonts (i.e. one for the currency symbol, one for the numbers and another for the decimal place) which would be physically located in three different sections of the file. The sorted version of the print file illustrates that, even in this simplified illustrative example, parsing data out of these types of formats is not straightforward.

### Building a Filer

As indicated above, "filer" is the general term used for the document-specific parsing code for extracting data out of an input data stream according to one aspect of the invention. More generally, in the language of object oriented systems it may also refer to a filer class for defining such parsing code. All of the rules for parsing a data stream are expressed directly in a filer's source code. The Java programming language is well suited for developing filers because of its support for dynamic instantiation. This makes it possible to utilize the filer program in another application without re-compiling the e-business application. Nevertheless, those skilled in the software arts will recognize that the same effective functionality may be achieved in other languages such as C++ by using the techniques appropriate for those languages, for example, dynamic link libraries (DLLs) in C++.

A simplified embodiment of a visual trainer tool is now described for generating filer code. which illustrates the principles of the invention. Given the benefit of the examples and teachings provided herein, those skilled in the art will be able to develop more complicated visual trainer tools for various lagacy formats. The visual trainer tool used in this example can view "Acme Presentation Format" (APF) files and generate filer code for APF files.

To create a filer by using the APF visual trainer, the user first opens a sample APF file. The APF visual trainer displays the APF file as it would appear if printed. This is sometimes referred to as a WYSIWYP display (What You See Is What You Print). The user begins to visually define the data desired to be extracted. The trainer provides a Select Text mode, which may be activated from a pull-down menu. The desired text fields may be highlighted with a mouse, for example, and the trainer will embed an appropriate rule in the filer code for extracting the selected text fields. Other data fields may also be directly or indirectly defined, for example, through conditional logic. An example of such conditional logic is given below where for purposes of illustration it is inserted manually into filer code, although it may be incorporated into the automatic code-generating capability as well. The areas of a document from which data may be eligible to be extracted are sometimes referred to as extraction data fields. An extraction data field may alternatively be defined by its location relative to any characteristic element of the document, serving as an anchor, such as a dollar sign or a particular heading. The implementation of methods for directly and indirectly defining extraction data fields in a document is known in the art, as it is practiced also in connection with known monolithic parsers, and thus need not be described in any detail here.

Before the APF visual trainer can generate a filer, all of the possible extraction data fields should be directly or indirectly defined. The next step is to generate the filer source code. This may be accomplished by activating the APF visual trainer "Publish Filer" mode, typically from a pull-down menu. The Publish Filer mode generates the source code specific to the particular sample document used to define the extraction data fields. The source code embodies the rules for extracting data from the extraction data fields. The visual trainer converts the filer source code to executable filer code and places the executable filer code in a filer repository 20 (see FIG. 5) for later use in parsing documents like the sample document arising in real-time APF input data streams.

At the same time the system maintains an association between the filer just generated and the sample document and input data stream type (here, APF) so that when this particular document arises in this particular input data stream type, the system will be able to load the relevant filer code. The association of filers with their documents and data stream types may be maintained for example through a simple mapping or database structure, the provision of which is entirely routine and need not be disclosed in any detail here.

The filer published by the APF Visual trainer is composed of Java source code that can parse the input data stream. The next section describes typical code generation by the APF visual trainer along with the supporting classes for the present illustrative example.

### Filer Classes

A particularly convenient and efficient way to implement filers is within an object-oriented framework, such as the Java programming language, which will be used here for purposes of illustration. FIG. 4 illustrates a filer class hierarchy. As is evident from FIG. 4, the base object of all filers is the "Filer" class. In the present example, a filer is more generally provided by a Java interface. An interface is a known concept in the Java language; it defines all of the methods that must be implemented by any class that "implements" the interface. The following listing shows the code for the Filer interface.

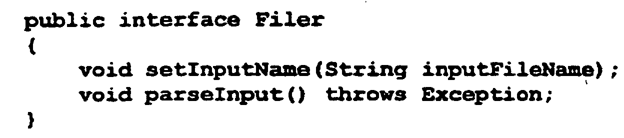

As can be seen from the Filer interface, any filer class simply needs to provide method implementations for *setInputName()* and *parseInput()*. Because all filers must implement these methods, a separate application could dynamically instantiate a special-purpose filer and use it to parse an input data stream later on. An XML conversion program, for example, can use the SampleAPFFiler_V1 to convert APF documents to XML documents, which can then be used more easily in electronic commerce applications. FIG. 5 illustrates this conversion process.

The first step occurs when a Data Loader application 21 detects that an APF file is ready to be converted to XML. This could occur, for example, when the APF file is copied into a predefined directory 22, which may be periodically polled by Data Loader 21. To convert the APF file, the Data Loader dynamically instantiates the *APFSampleFileFiler* class and uses it to convert the APF file to XML by calling the APFSampleFileFiler object's setInput() and parseInput() methods. Since the APFSampleFileFiler is a "Filer" object (i.e. it implements the Filer interface), the Data Loader can always call the Filer methods-regardless of the filer type-without having to know anything about the implementations of these methods.

The immediate base class of the APFSampleFileFiler is the *APFFilerBase* class. This class is shown in the following listing.

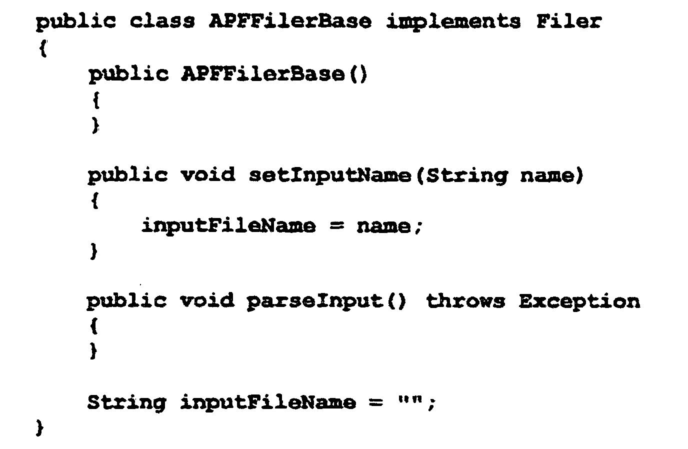

As can be seen from the APFFilerBase class, its only action is to set a class attribute called *inputFileName* in the setlnput() method. This is so here because in the present illustrative implementation all APF data will be input simply as disk-based files. No limitation is intended, however, to disk-based files, and those skilled in the art will readily be able to configure implementations for other inputs.

Now that the basic filer class hierarchy in our example has been described, we consider the code for a program and file called *SampleAPFFileFiler_V1.java*, illustrative of code which may be generated by the APF visual trainer. This code is shown in the following listing.

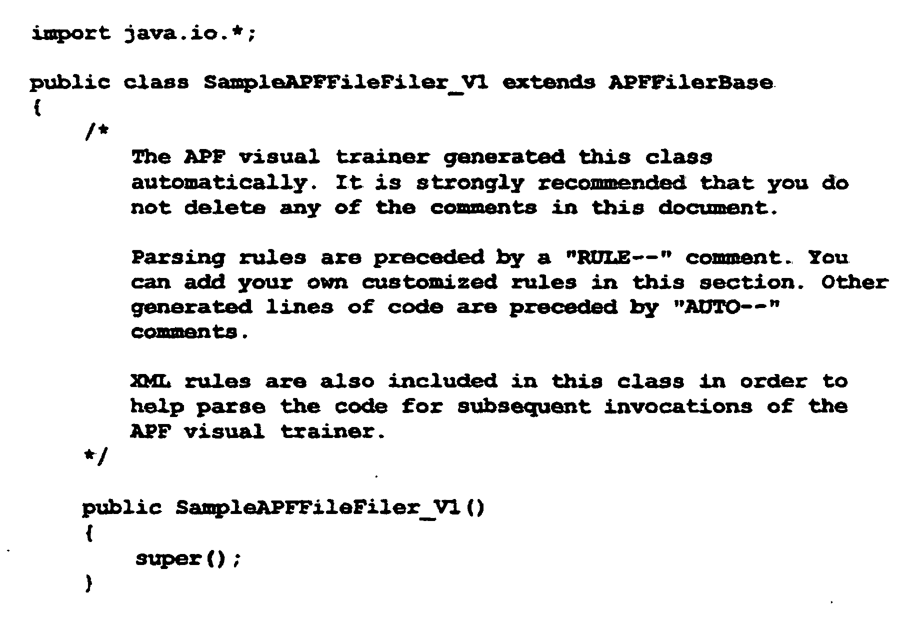

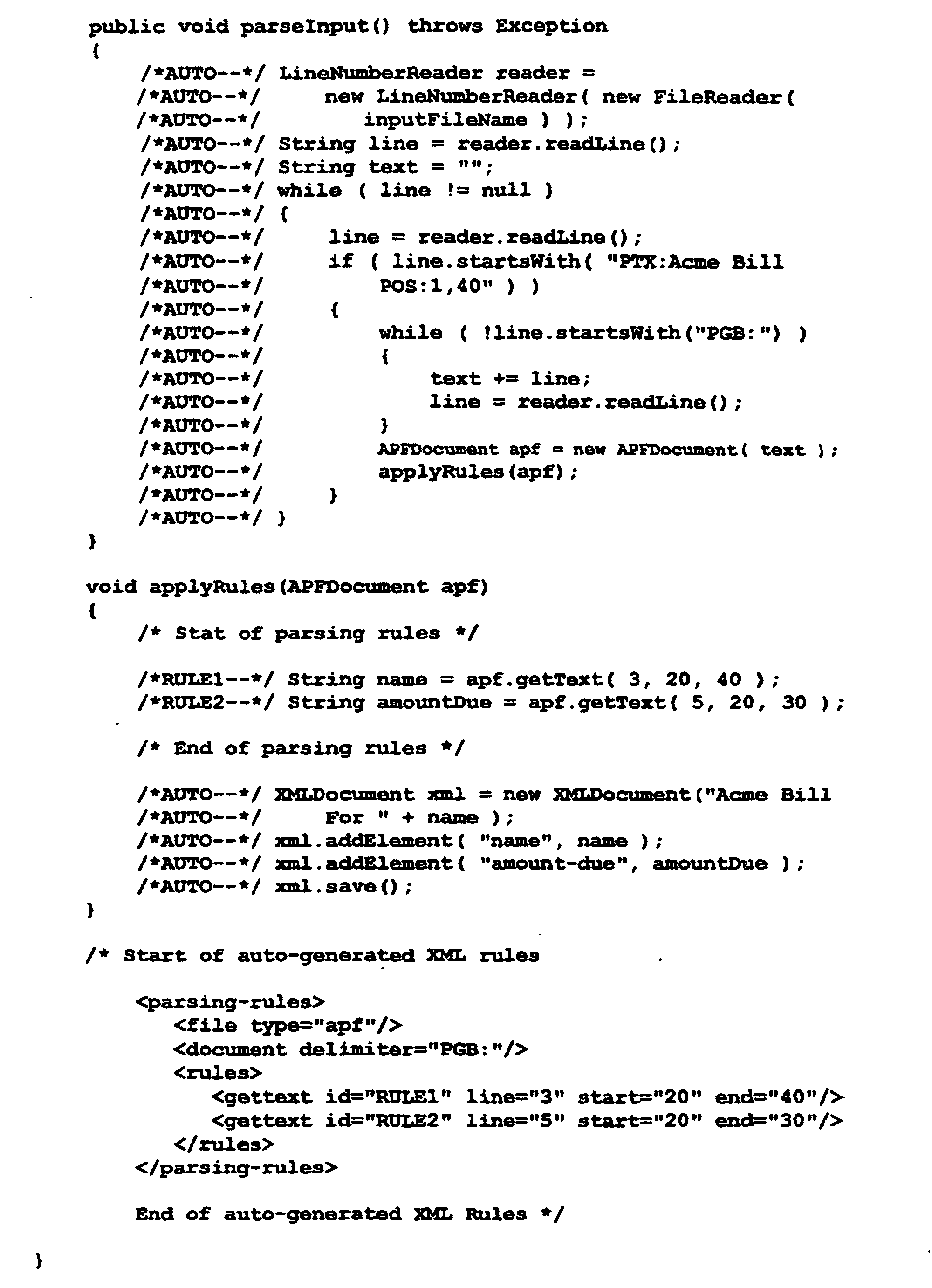

A description is now given of a few aspects of the SampleAPFFileFiler_V1.java program. First, since it extends the APFFilerBase class, it automatically inherits the setInput() method implementation in that class as well as the inputFileName class attribute. The most interesting parts of the SampleAPFFileFiler_V1 class are the parseInput() and *applyRules()* methods.

In the present example, the entire implementation of the parseInput() method was generated by the APF visual trainer. Each line of code is preceded by a characteristic /*AUTO-*/ comment, which indicates that the code was generated automatically by the visual trainer. These comments are included in the class to demark the automatically generated code distinguishing it from any manually inserted code so that when the visual trainer is subsequently used to edit SampleAPFFileFiler_V1, the visual trainer will be able to distinguish the code that was auto-generated from custom code logic that may be added by a developer.

The XML rules are also included as a comment at the end of the class. These rules represent the standard parsing logic that was generated by the APF visual trainer. When the visual trainer is used to "edit" the SampleAPFFileFiler_V1.java program, it can re-build all of the rules by reading the XML metadata and rules. This is so because XML is much easier to parse than the Java code in the class. In general, filer source code will also include appropriate method calls to skip over unselected document elements to the selected data fields.

The next section describes how custom rules may be manually inserted into an automatically generated filer.

### Adding Custom Parsing Rules to a Generated Filer

In many cases it may become necessary to insert custom rules into a generated filer. This may be required if the input data stream contains unique idiosyncrasies that cannot, or simply are not, handled by the existing tool. Suppose, for example, that Acme provides bonus reward points to customers that are members of the "platinum" program. It would be desirable to pass this information along so that it becomes part of the resultant XML document But since not all customers are members of the platinum program, the APF visual trainer was not devised to generate this kind of conditional logic. The requisite logic may nevertheless be added to the auto-generated filer as a custom rule. In fact, such conditional logic may also be included in the visual trainer code-generating capabilities, as skilled programming practitioners will recognize, but for purposes of illustrating code customization this capability is added here manually.

To add a custom rule to the SampleAPFFileFiler_V1 class, one can simply edit the applyRules() method. An example of an inserted rule is shown in the following listing.

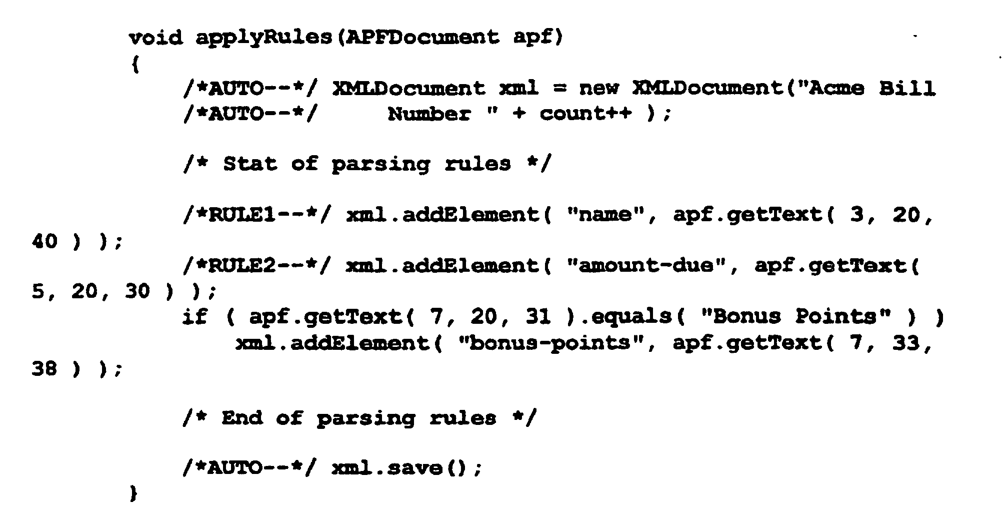

When the filer is run again, it will see that a custom rule has been inserted. Because this rule has not been defined in the XML rules, the filer knows that this code should be preserved. To ensure that this code is clearly marked, the visual trainer may also add a custom rule when it saves the filer. In addition, if the programmer fails to insert a standard "/*CUST―" comment before any custom rule lines, the visual trainer can do it, as shown in the following code snippet.

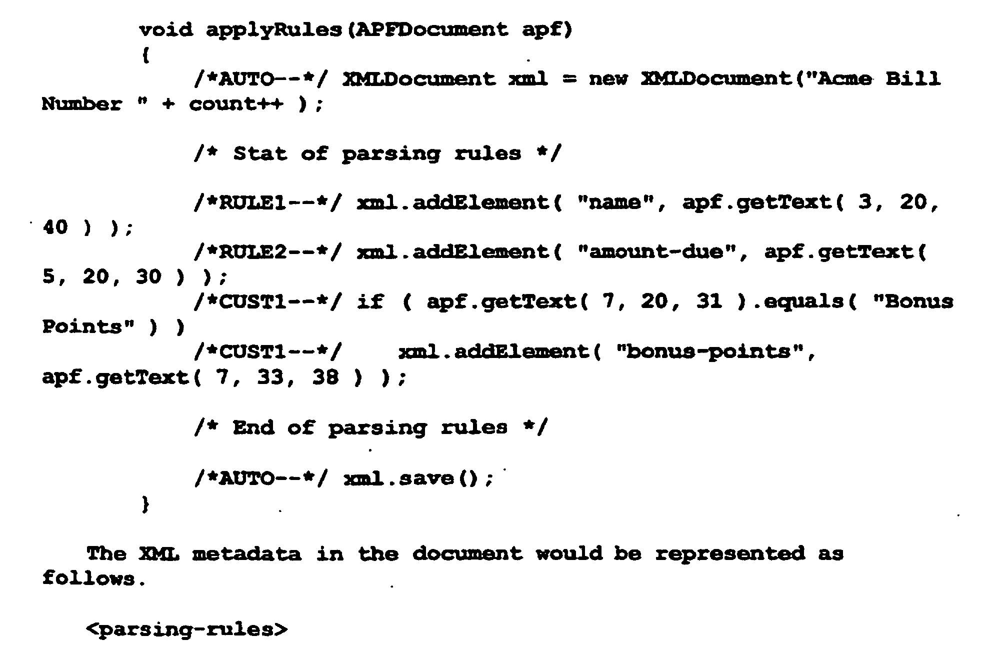

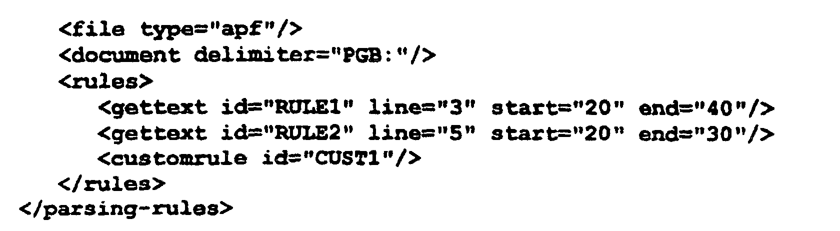

This example demonstrates yet another advantage of the invention: any input data stream can be successfully parsed, regardless of the auto-code-generating capabilities of the visual trainer used.

The above descriptions and drawings disclose illustrative embodiments of the invention. Given the benefit of this disclosure, those skilled in the art will appreciate that various modifications, alternate constructions, and equivalents may also be employed to achieve the advantages of the invention. For example, while an embodiment of the invention has been described here in terms of the Java programming language, no limitation to that language is intended. Thus, the invention is not to be limited to the above description and illustrations, but is to be defined by the following claims.

## Claims

1. A method of parsing electronic documents for selected data, each said electronic document being represented by an input data stream of characteristic type, comprising the steps of:
displaying (16) a sample document (15) representative of a first said characteristic input data stream type;
defining extraction data fields in said sample document;
automatically generating filer source code (17) specific to said sample document and said first characteristic input data stream type, said automatically generated filer source code (17) embodying rules for extracting data from said extraction data fields;
maintaining an association between said filer source code (17) and said first characteristic input data stream type; and
storing said filer source code (17) for subsequent use in parsing further data-bearing documents of said first characteristic input data stream type.

2. A method according to Claim 1, further comprising the step of:
manually inserting custom source code into said automatically generated filer source code (17) for handling special conditions for data extraction.

3. A method according to Claim 2, further comprising the steps of:
demarking lines of said filer source code (17) so as to distinguish said automatically generated filer source code from said manually inserted custom source code; and
overlaying only said automatically generated filer source code (17) on subsequent runs of said steps of defining extraction data fields. and automatically generating filer source code, whereby any said custom source code will be preserved.

4. A method according to Claim 3, wherein said demarking step comprises the step of preceding each line of said automatically generated filer source code with a characteristic comment code, thereby to distinguish said source codes.

5. A method according to Claim 1, further comprising the steps of:
converting said filer source code to executable filer code;
making said executable filer code available from a filer repository (20);
providing an association between individual filer codes in said repository and said sample document and input data stream type from which each said filer code was derived; and
instantiating a filer code from said repository in response to an associated document in an input data stream.

6. A method according to any one of the preceding claims, further comprising executing said filer source code specific to said sample document and characteristic input data stream type in response to an electronic document substantially the same as said sample document in an input data stream of said first characteristic type to extract selected data therefrom.

7. A method according to Claim 1, further comprising repeating the steps of displaying, defining, generating, maintaining and storing for each of a plurality of characteristic document types thereby building a store of filer source code for subsequent use in parsing a plurality of electronic document types.

8. A method according to Claim 7, wherein said step of automatically generating filer source code comprises the substeps of:
providing a filer object class including a parsing method; and
automatically providing an implementation of said parsing method for each said representative document type and each said characteristic input data stream type, said implementation embodying rules for parsing said extraction data fields defined in said defining step.

9. A method according to Claim 8, further comprising the step of providing a separate filer base class corresponding to each said characteristic input data stream type.

10. A method of parsing selected data from electronic documents, each said electronic document being one of a plurality of characteristic document types and being represented by an input data stream of characteristic type, comprising the steps of:
maintaining an assemblage of filer source code generated according to the method of Claim 7 and specific to each said characteristic document type and said input data stream characteristic type;
presenting for parsing an electronic document of a characteristic document type and characteristic input data stream type; and
selecting at least one extraction data field in said electronic document; and
executing filer source code specific to the characteristic document type and characteristic input data stream type of the presented electronic document to extract data from said at least one selected extraction data field.

11. A parsing engine for parsing electronic documents for selected data, each said electronic document being represented by an input data stream of characteristic type, comprising:
means (16) for displaying a sample document representative of a first said characteristic input data stream type;
means (10) for defining extraction data fields in said sample document;
means (16) for automatically generating filer source code (17) specific to said sample document and said first characteristic input data stream type, said automatically generated filer source code (17) embodying rules for extracting data from said extraction data fields;
means (20) for maintaining an association between said filer source code and said first characteristic input data stream type; and
means (20) for storing said filer source code for subsequent use in parsing further data-bearing documents of said first characteristic input data stream type.

## Patentansprüche

1. Verfahren zum Parsing von Elektronikdokumenten nach ausgewählten Daten, wobei jedes der Elektronikelemente repräsentiert wird durch einen Eingangsdatenstrom charakteristischer Art, die Schritte umfassend:
Anzeigen (16) eines Probendokumentes (15), das repräsentativ ist bezüglich einer ersten charakteristischen Eingangsdatenstromart;
Definieren von Extraktionsdatenfeldern in dem Probendokument;
automatisches Generieren von Ordnerquellencode (17), spezifisch für das Probendokument und die erste charakteristische Eingangsdatenstromart, wobei der automatisch generierte Ordnerquellencode (17) Regeln zum Extrahieren von Daten aus den Extraktionsdatenfeldern enthält;
Beibehalten einer Zuordnung zwischen dem Ordnerquellencode (17) und der ersten charakteristischen Eingangsdatenstromart; und
Speichern des Ordnerquellencodes (17) für nachfolgende Verwendung beim Parsing fernerer datentragender Dokumente der ersten charakteristischen Eingangsdatenstromart.

2. Verfahren nach Anspruch 1, außerdem den Schritt umfassend:
manuelles Einfügen von Kundenquellencode in den automatisch generierten Ordnerquellencode (17) zum Behandeln spezieller Bedingungen zur Datenextraktion.

3. Verfahren nach Anspruch 2, ferner die Schritte umfassend:
Abgrenzen von Zeilen des Ordnerquellencodes (17), um den automatisch generierten Ordnerquellencode von dem manuell eingefügten Kundenquellencode zu unterscheiden; und
Überschreiben nur des automatisch generierten Ordnerquellencode (17) bei nachfolgenden Durchläufen der Schritte des Definierens von Extraktionsdatenfeldern und automatischen Generierens von Ordnerquellencode, wodurch irgendwelcher Kundenquellencode bewahrt wird.

4. Verfahren nach Anspruch 3, wobei der Abgrenzungsschritt den Schritt des Voranstellens eines charakteristischen Kommentierungscodes vor jede Zeile des automatisch generierten Ordnerquellencodes umfasst, um hierdurch die Quellencodes zu unterscheiden.

5. Verfahren nach Anspruch 1, außerdem die Schritte umfassend:
Umsetzen des Ordnerquellencodes in ausführbaren Ordnercode;
Verfügbarmachen des ausführbaren Ordnercodes von einem Ordnerverwahrungsort (20);
Bereitstellen einer Zuordnung zwischen individuellen Ordner-Codes in dem Verwahrungsort und dem Probendokument und der Eingangsdatenstromart, von denen jeder der Ordner-Codes hergeleitet worden ist; und
Instanziieren eines Ordner-Codes aus dem Verwahrungsort ansprechend auf ein zugeordnetes Dokument in einem Eingangsdatenstrom.

6. Verfahren nach einem der vorangehenden Ansprüche, außerdem das Ausführen des für das Probendokument und die charakteristische Eingangsdatenstromart spezifischen Ordnerquellencodes ansprechend auf ein elektronisches Dokument umfassend, das im wesentlichen dasselbe ist, wie das Probendokument in einem Eingangsdatenstrom der ersten charakteristischen Art zum Extrahieren ausgewählter Daten daraus.

7. Verfahren nach Anspruch 1, außerdem das Wiederholen der Schritte des Anzeigens, Definierens, Generierens, Beibehaltens und Speicherns für jede einer Vielzahl von charakteristischen Dokumentenarten umfassend, hierdurch einen Speicher von Ördnerquellencode für nachfolgende Verwendung beim Parsing einer Vielzahl von Elektronikdokumentenarten aufbauend.

8. Verfahren nach Anspruch 7, wobei der Schritt des automatischen Generierens von Ordnerquellencode die Unterschritte umfasst:
Bereitstellen einer ein Parsing-Verfahren einschließenden Ordnerobjektklasse; und
automatisches Bereitstellen einer Implementierung des Parsing-Verfahrens für jede der repräsentativen Dokumentenarten und jede der charakteristischen Eingangsdatenstromarten, wobei die Implementierung Regeln zum Parsing der in dem Definierschritt definierten Extraktionsdatenfelder enthält.

9. Verfahren nach Anspruch 8, außerdem den Schritt des Bereitstellens einer separaten Ordnerbasisklasse umfassend entsprechend jeder der charakteristischen Eingangsdatenstromarten.

10. Verfahren des Parsings ausgewählter Daten aus Elektronikdokumenten, wobei jedes der Elektronikdokumente eines aus einer Vielzahl charakteristischer Dokumentenarten ist und repräsentiert wird durch einen Eingangsdatenstrom charakteristischer Art, die Schritte umfassend:
Bewahren einer Ansammlung von in Übereinstimmung mit dem Verfahren nach Anspruch 7 generierten, zu jeder von der charakteristischen Dokumentenart und der charakteristischen Eingangsdatenstromart spezifischen Ordnerquellencodes;
Präsentieren eines Elektronikdokumentes einer charakteristischen Dokumentenart und charakteristischen Eingangsdatenstromart zum Parsing; und
Auswählen mindestens eines Extraktionsdatenfeldes in dem Elektronikdokument; und
Ausführen von Ordnerquellencode spezifisch zu der charakteristischen Dokumentenart und der charakteristischen Eingangsdatenstromart des präsentierten Elektronikdokumentes zum Extrahieren von Daten aus mindestens einem ausgewählten . Extraktionsdatenfeld.

11. Parsing-Maschine zum Parsing von Elektronikdokumenten nach ausgewählten Daten, wobei jedes der Elektronikdokumente repräsentiert wird durch einen Eingangsdatenstrom charakteristischer Art, umfassend:
eine Vorrichtung (16) zum Anzeigen eines Probendokumentes, das repräsentativ ist bezüglich einer ersten charakteristischen Eingangsdatenstromart;
eine Vorrichtung (10) zum Definieren von Extraktionsdatenfeldern in dem Probendokument;
eine Vorrichtung (16) zum automatischen Generieren von Ordnerquellencode (17) spezifisch bezüglich dem Probendokument und der ersten charakteristischen Eingangsdatenstromart, wobei der automatisch generierte Ordnerquellencode (17) Regeln zum Extrahieren von Daten aus den Extraktionsdatenfeldern enthält;
eine Vorrichtung (20) zum Bewahren einer Zuordnung zwischen dem Filterquellencode und der ersten charakteristischen Eingangsdatenstromart; und
eine Vorrichtung (20) zum Speichern des Filterquellencodes für nachfolgende Verwendung beim Parsing fernerer datentragender Dokumente des ersten charakteristischen Eingangsdatenstromtyps.

## Revendications

1. Procédé d'analyse de documents électroniques pour des données sélectionnées, chaque dit document électronique étant représenté par un train de données d'entrée de type caractéristique, comprenant les étapes consistant à :
afficher (16) un document échantillon (15) représentatif d'un premier dit type de train de données d'entrée caractéristique ;
définir des champs de données d'extraction dans ledit document échantillon ;
générer de manière automatique un code source d'archivage (17) spécifique audit document échantillon et audit premier type de train de données d'entrée caractéristique, ledit code source d'archivage (17) généré de manière automatique incorporant des règles pour extraire des données à partir desdits champs de données d'archivage ;
maintenir une association entre ledit code source d'archivage (17) et ledit premier type de train de données d'entrée caractéristique ; et à
stocker ledit code source d'archivage (17) pour une utilisation ultérieure dans l'analyse d'autres documents qui portent des données dudit premier type de train de données d'entrée caractéristique.

2. Procédé selon la revendication 1, comprenant de plus l'étape consistant à :
insérer de manière manuelle un code source personnalisé dans ledit code source d'archivage (17) généré de manière automatique afin de traiter des conditions spéciales d'extraction de données.

3. Procédé selon la revendication 2, comprenant de plus les étapes consistant à :
démarquer des lignes dudit code source d'archivage (17) afin de distinguer ledit code source d'archivage généré de manière automatique dudit code source personnalisé inséré de manière manuelle ; et à
ne recouvrir que le code source d'archivage généré de manière automatique (17) au cours des lancements ultérieurs desdites étapes consistant à définir des champs de données d'extraction et à générer de manière automatique un code source d'archivage, grâce à quoi n'importe quel dit code source personnalisé sera préservé.

4. Procédé selon la revendication 3, dans lequel ladite étape consistant à démarquer comprend l'étape consistant à faire précéder chaque ligne dudit code source d'archivage généré de manière automatique, par un code commentaire caractéristique, afin de distinguer de ce fait lesdits codes sources.

5. Procédé selon la revendication 1, comprenant de plus les étapes consistant à :
convertir ledit code source d'archivage en un code d'archivage exécutable ;
rendre ledit code d'archivage exécutable disponible à partir d'un dépôt d'archivage (20) ;
fournir une association entre différents codes d'archivage dans ledit dépôt et ledit document échantillon et le type de train de données d'entrée à partir duquel chaque dit code d'archivage a été dérivé; et à
instancier un code d'archivage à partir dudit dépôt en réponse à un document associé dans un train de données d'entrée.

6. Procédé selon l'une quelconque des revendications précédentes, comprenant de plus l'exécution dudit code source d'archivage spécifique audit document échantillon et au type de train de données d'entrée caractéristique, en réponse à un document électronique sensiblement identique audit document échantillon dans un train de données d'entrée dudit premier type caractéristique pour en extraire des données sélectionnées.

7. Procédé selon la revendication 1, comprenant de plus la répétition des étapes consistant à afficher, définir, générer, maintenir et stocker pour chaque type parmi une pluralité de types de documents caractéristiques, en construisant de ce fait un stockage de code source d'archivage pour une utilisation ultérieure dans l'analyse d'une pluralité de. types de documents électroniques.

8. Procédé selon la revendication 7, dans lequel ladite étape de génération automatique de code source d'archivage comprend les sous-étapes consistant à :
fournir une classe objet d'archivage comprenant un procédé d'analyse ; et à
fournir de manière automatique une mise en oeuvre dudit procédé d'analyse de chaque dit type de document représentatif et de chaque dit type de train de données d'entrée caractéristique, ladite mise en oeuvre incorporant des règles pour analyser lesdits champs de données d'extraction définis dans ladite étape de définition.

9. Procédé selon la revendication 8, comprenant de plus l'étape consistant à fournir une classe base d'archivage séparée correspondant à chaque type de train de données d'entrée caractéristique.

10. Procédé d'analyse de données sélectionnées à partir de documents électroniques, chaque dit document électronique étant d'un type parmi une pluralité de types de documents caractéristiques et étant représenté par un train de données d'entrée de type caractéristique, comprenant les étapes consistant à :
maintenir un assemblage de code source d'archivage généré selon le procédé de la revendication 7 et spécifique à chaque dit type de document caractéristique et à chaque dit type caractéristique de train de données d'entrée ;
présenter pour analyser un document électronique d'un type de document caractéristique et d'un type de train de données d'entrée caractéristique ; et à
sélectionner au moins un champ de données d'extraction dans ledit document électronique ; et à
exécuter un code source d'archivage spécifique au type de document caractéristique et au type de train de données d'entrée caractéristique du document électronique présenté afin d'extraire des données à partir dudit au moins un champ de données d'extraction sélectionnées.

11. Moteur d'analyse pour analyser des documents électroniques pour des données sélectionnées, chaque dit document électronique étant représenté par un train de données d'entrée de type caractéristique, comprenant :
des moyens (16) pour afficher un document échantillon représentatif d'un premier dit type de train de données d'entrée caractéristique ;
des moyens (10) pour définir des champs de données d'extraction dans ledit document échantillon ;
des moyens (16) pour générer de manière automatique un code source d'archivage (17) spécifique audit document échantillon et audit premier type de train de données d'entrée caractéristique, ledit code source d'archivage (17) généré de manière automatique incorporant des règles pour extraire des données à partir desdits champs de données d'archivage ;
des moyens (20) pour maintenir une association entre ledit code source d'archivage et ledit premier type de train de données d'entrée caractéristique ; et
des moyens (20) pour stocker ledit code source d'archivage pour une utilisation ultérieure dans l'analyse d'autres documents qui portent des données dudit premier type de train de données d'entrée caractéristique.
